Europäisches Patentamt

European Patent Office

Office européen des brevets

(19)

(11) **EP 0 738 841 A2**

(12) **EUROPEAN PATENT APPLICATION**

(43) Date of publication:
**23.10.1996 Bulletin 1996/43**

(51) Int Cl.6: **F16H 1/46**

(21) Application number: **96301657.1**

(22) Date of filing: **11.03.1996**

(84) Designated Contracting States:
**DE FR GB**

(30) Priority: **20.04.1995 JP 94661/95**

(71) Applicant: **TUOIS K.K.**
**Adachi-Gun, Fukushima-Ken (JP)**

(72) Inventor: **Shibata, Tooru, c/o Tuois K.K.**
**Adachi-Gun, Fukushima-ken (JP)**

(74) Representative: **Parry, Christopher Stephen**
**Saunders & Dolleymore**
**9 Rickmansworth Road**
**Watford, Herts WD1 7HE (GB)**

(54) **Speed reduction apparatus and method**

(57)    A differential gear mechanism (1) is constructed of a carrier that constitutes an input shaft, an internal sun gear (A) that is formed in an exterior case (3), a planetary gear (B) that is internally meshed with the internal sun gear (A) and is journaled eccentrically on a carrier (K), an internal gear (C) that is integrally attached to the planetary gear (B), and an external gear (D) that is meshed with the internal gear (C) to constitute a (W) mechanism and is connected to an output shaft (S). The rotation transmission mechanism (2) is constructed of a diversion input gear (E) (ie an internal sun gear) that is formed in an exterior case (3), a division output gear (H) (ie an external sun gear) that is coaxially secured to the output shaft (S) from the above mentioned differential gear mechanism (1), and an idler gear (F) (ie a planetary gear) that is meshed with both the said diversion output gear (H) and that said diversion input gear (E) and that has a rotary shaft (4) fixedly arranged in the said exterior case (3) in a star type configuration and revolved.

Fig 2

## Description

The present invention relates to a speed reduction apparatus and method using a differential gear mechanism and, more particularly, to a speed reduction apparatus and method characterized in that a force of rotation at an output side is diverted and a diverted portion thereof is transmitted (i. e. fed back) to an internal sun gear in the differential gear mechanism. The present invention also relates to a method of making a speed reduction apparatus as well as a machine which incorporates a speed reduction apparatus that is made according to such a method.

There have hitherto been proposed a variety of the speed reduction apparatus using a planetary gear mechanism and a differential gear mechanism. Such an apparatus has been proposed in order to achieve a simplification of the mechanism, an enhancement of the transmission efficiency of a driving force, an enlargement of the speed reduction ratio, and an enhancement of the durability and the reliability of the mechanism.

By the way, it has been recognized that an ordinary speed reduction apparatus. when constructed to obtain an enhanced ratio of speed reduction, involves a large drop in efficiency and, inversely when it is designed to obtain a higher efficiency, makes it necessary to restrain the ratio of speed reduction at an unacceptably low value. It is seen, therefore, that the ratio of speed reduction and the efficiency has heretofore been considered to lie in an antinomic relationship in a speed reduction apparatus and method.

For example, it has been found that (1) when a plurality of planetary gears are simply connected in series, a large ratio of speed reduction is obtained but the efficiency of the entire system becomes a multiplication of the efficiencies of individual planetary gear mechanisms, thus largely being prohibitively lowered; that (2) also in a compounded planetary gear mechanism, when the ratio of speed reduction is set at 1/15, there results a largely lowered efficiency as low as 32 % and that (3) also in a strange planetary gear mechanism, whilst a ratio of speed reduction of 1/100 results in an efficiency of 75 %, if the ratio of speed reduction is set at 1/1000 there ensues an efficiency that is not greater than 50 %.

Further, (4) in an ordinary cycloid speed reduction mechanism which has its mesh efficiency tending to be increased because of a large number of teeth that can be meshed at the same time, the disadvantage has yet arisen that the enlargement of the ratio of speed reduction by increasing the number of the teeth results in a decreased efficiency. For example, it has been found that a ratio of speed reduction of 1/40 gives rise to an efficiency of 75 % and if this ratio of speed reduction is doubled to 1/80, there results an efficiency of 57 %. Furthermore, it has been found that if two such mechanisms are connected in series to obtain an enlarged ratio of speed reduction of 1/3200, the resulting efficiency is still further lowered to 42 %.

With the above mentioned problems taken into consideration, it is an object of the present invention to provide a novel and advanced speed reduction apparatus and method which ensure a higher efficiency that has hitherto not been achievable, yet if a higher ratio of speed reduction is employed.

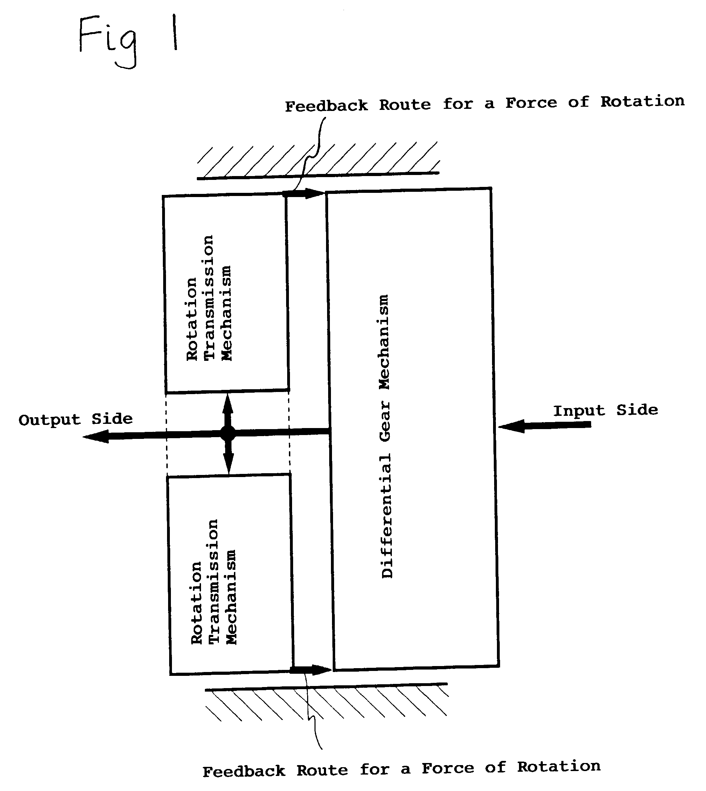

In order to attain the object mentioned above, a speed reduction method and apparatus according to the present invention are constructed as mentioned below. Fig. 1 of the accompanying drawings is a diagrammatic view illustrating an image of the present invention.

Thus, in accordance with the present invention, in a first aspect thereof, there is provided a speed reduction apparatus, characterized in that it comprises: a differential gear mechanism having an input shaft and an output shaft; and a rotation transmission mechanism that is connected to the output shaft of the said differential gear mechanism for transmitting a force of rotation from the said output shaft to an internal sun gear in the said differential gear mechanism.

In other words, the apparatus is characterized in that the output force of rotation from the said differential gear mechanism is fed back to the internal sun gear of the said differential gear mechanism via the said rotation transmission mechanism.

It should be noted that the said rotation transmission mechanism, in addition to having a function to transmit a rotation as it is, is constructed by a speed reducing mechanism or a speed increasing mechanism in order to obtain a ratio of speed reduction as desired.

It should also be noted that with respect to a direction of the rotation that is transmitted from the said rotation transmission mechanism, an input direction of the rotation and an output direction of the rotation may be set to be identical to each other, but they may yet be set to vary from each other if needed.

It should further be noted that in a construction of the rotation transmission mechanism, an additional internal sun gear and a carrier may be made integral with each other.

It should further be noted that the ratio of speed reduction of such a said rotation transmission mechanism should not be set to be excessive but to be a value that is close to 1, preferably from 0.7 to 1.3.

In such a construction of the apparatus as mentioned above, it can be seen that a driving force (i. e. the force of rotation) that is furnished from the said input shaft results in a reduction of speed by means of the said differential gear mechanism and is output from the said output shaft and at the same time the force of the rotation at the said output shaft is diverted so as to drive the said rotation transmission mechanism.

It can be seen that the said rotation transmission mechanism acts as a mechanism that transmits a rotation at a reduced speed, or an increased speed or at a ratio of speed reduction of 1/1 and further transmits such a rotation as will be converted in its direction.

It can also be seen that the force of rotation from the said rotation transmission mechanism acts as a force of the rotation for the said internal sun gear in the above mentioned differential gear mechanism. Thus, there will be formed a feedback route for a force of rotation from the said rotation transmission mechanism to the said differential gear mechanism.

Accordingly, it will be apparent that by imparting a suitable form of rotation to the said internal sun gear in the said differential gear mechanism via the said feedback route, a wide variety of the speed reduction can be carried out.

The present invention thus provides also, in a second aspect thereof, a method of reducing the rate of rotation of a rotary member, characterized in that it comprises the steps of: providing a differential mechanism with an input shaft that constitutes the said rotary member and an output shaft at which the said rate of rotation is to be reduced; connecting a rotary transmission mechanism to the said output shaft of the said differential gear mechanism; and transmitting a force of rotation from the said output shaft to an internal sun gear in the said gear mechanism.

According to another important feature of the present invention in this second aspect thereof, a method of reducing the rate of rotation of a rotary member is also characterized in that it further comprises the step of constituting the said rotation transmission mechanism with a speed reducing mechanism or, alternatively, with a speed increasing mechanism.

According to another important feature of the present invention, in this second aspect thereof, a method of reducing the rate of rotation of a rotary member is also characterized in that an input direction of the rotation and an output direction of the rotation of the said rotation transmission mechanism are different from each other.

According to another important feature of the present invention, in this second aspect thereof, a method of reducing the rate of rotation of a rotary member is also characterized in that an additional internal sun gear and a carrier are made integral with each other in the said rotation transmission mechanism.

According to another important feature of the present invention, in this second aspect thereof, a method of reducing the rate of rotation of a rotary member is also characterized in that it further comprises the step of constituting the said different gear mechanism with a carrier or the said carrier that constitutes the said input shaft, the said internal sun gear that is formed in an exterior case, a planetary gear that is internally meshed with the said internal sun gear and is journaled eccentrically on the said carrier, an internal gear that is integrally attached to the said planetary gear, and an external gear that is meshed with the said internal gear to constitute a "W" mechanism and is connected to the said output shaft.

According to another important feature of the present invention, in this second aspect thereof, a method of reducing the rate of rotation of a rotary member is also characterized in that it further comprises the step of constituting the said rotation control mechanism with a diversion input gear that is formed in an exterior case or the said exterior case, a diversion output gear that is coaxially secured to the said output shaft from the said differential gear mechanism, and an idler gear that is meshed with both the said diversion output gear and the said diversion input gear and has a rotary shaft fixedly arranged in the said exterior case in a star type configuration and adapted to be revolved.

According to another important feature of the present invention, in this second aspect thereof, a method of reducing the rate of rotation of a rotary member is also characterized in that the said diversion input gear is an internal sun gear; the said diversion output gear is an internal sun gear: and the said idler gear is a planetary gear.

According to another important feature of the present invention, in this second aspect thereof, a method of reducing the rate of rotation of a rotary member is also characterized in that it further comprises the step of ranging the ratio of speed reduction of the said rotary transmission mechanism between 0.7 and 1.3.

The present invention also provides, in a third aspect thereof, a method of making a speed reduction apparatus, characterized in that it comprises the steps of: providing a differential mechanism with an input shaft and an output shaft; and connecting a rotary transmission mechanism to the said output shaft of the said differential gear mechanism so that a force of rotation from the said output shaft may be transmitted to an internal sun gear in the said gear mechanism.

Another important feature of the present invention, in this third aspect thereof, a method of making a speed reduction apparatus is also characterized in that it further comprises the step of constituting the said rotation transmission mechanism with a speed reducing mechanism or, alternatively. with a speed increasing mechanism.

Another important feature of the present invention. in this third aspect thereof, a method of making a speed reduction apparatus is also characterized in that an input direction of the rotation and an output direction of the rotation of the said rotation transmission mechanism are different from each other.

Another important feature of the present invention, in this third aspect thereof. a method of a speed reduction apparatus is characterized in that an additional internal sun gear and a carrier are made integral with each other in the said rotation transmission mechanism.

Another important feature of the present invention, in this third aspect thereof, a method of making a speed reduction apparatus is also characterized in that it further comprises the step of constituting the said different gear mechanism with a carrier or the said carrier that constitutes the said input shaft, the said internal sun gear that is formed in an exterior case, a planetary gear that is internally meshed with the said internal sun gear and is journaled eccentrically on the said carrier, an internal gear that is integrally attached to the said planetary gear, and an external gear that is meshed with the said internal gear to constitute a "W" mechanism and is connected to the said output shaft.

Another important feature of the present invention, in this third aspect thereof, a method of making a speed reduction apparatus is also characterized in that it further comprises the step of constituting the said rotation transmission mechanism with a diversion input gear that is formed in an exterior case or the said exterior case, a diversion output gear that is coaxially secured to the said output shaft from the said differential gear mechanism, and an idler gear that is meshed with both the said diversion output gear and the said diversion input gear and has a rotary shaft fixedly arranged in the said exterior case in a star type configuration and adapted to be revolved.

Another important feature of the present invention, in this third aspect thereof, a method of making a speed reduction apparatus is also characterized in that it further comprises the step of ranging the ratio of speed reduction of the said rotary transmission mechanism between 0.7 and 1.3.

Another important feature of the present invention, in this third aspect thereof, a method of making a speed reduction apparatus is also characterized in that the said diversion input gear is constituted by an internal sun gear; the said diversion output gear is constituted by an external sun gear: and the said idler gear is constituted by a planetary gear.

The present invention also provides, in a forth aspect thereof. a machine which incorporates a speed reduction apparatus as set forth in the foregoing.

The present invention also provides a speed reduction apparatus that is made according to a method of making as set forth in the foregoing.

The present invention will better be understood from the following detailed description and the drawings attached hereto showing certain illustrative embodiments of the present invention. In this connection, it should be noted that such embodiments as illustrated in the accompanying drawings are intended in no way to limit the present invention, but to facilitate an explanation and understanding thereof.

In the accompanying drawings:

Fig. 1 is a diagrammatic view illustrating an image of the present invention;

Fig. 2 is a diagrammatic view in a gearing construction illustrating a first embodiment (i. e. Embodiment 1) of the present invention;

Fig. 3 is a longitudinal cross sectional view, partly cut away, illustrating the first embodiment (i. e. Embodiment 1) of the present invention;

Fig. 4 is a diagrammatic view illustrating a differential gear mechanism in general;

Fig. 5 is a diagrammatic view illustrating a differential gear mechanism in general;

Fig. 6 is a diagrammatic view view in a gearing construction illustrating a modification of the first embodiment (i. e. Embodiment 1) of the present invention: and

Fig. 7 is a diagrammatic view in a gearing construction illustrating a second embodiment (i. e. Embodiment 2) of the present invention.

With respect to certain exemplary embodiments of the present invention that may be constructed as mentioned above, an explanation will now be given in detail with reference to the accompanying drawings.

**[Embodiment 1]**

With reference to the accompanying drawings, an explanation will now be given with respect to several specific examples of a certain embodiment of the speed reduction apparatus and method according to the present invention.

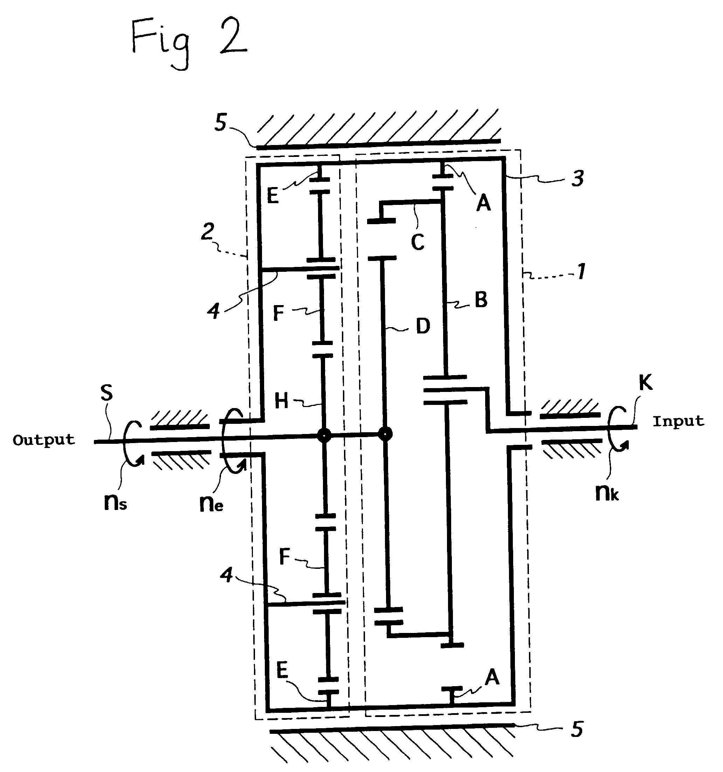

Fig. 2 is a diagrammatic view illustrating the construction of a first embodiment (i. e. Example 1) according to the present invention. In the Figure, it should be noted that a portion 1 and a portion 2 each of which is enclosed by a broken line, correspond, respectively, to a differential gear mechanism 1 and a rotation transmission mechanism 2 in the above mentioned construction of the present invention, with concrete constructions of relevant gears being illustrated therein.

The differential gear mechanism 1 is constructed of a carrier $\underline{K}$ that constitutes an input shaft, an internal sun gear $\underline{A}$ that is formed in an exterior case 3 of the said mechanism, a planetary gear $\underline{B}$ that is internally meshed with the said internal sun gear $\underline{A}$ and eccentrically journaled on the carrier $\underline{K}$, an internal gear $\underline{C}$ that is integrally attached to the said planetary gear $\underline{B}$, and an external gear $\underline{D}$ that is meshed with the said internal gear $\underline{C}$ and has a rotary shaft connected to an output shaft $\underline{S}$.

In connection with the above, it should be noted that the said internal gear $\underline{C}$ and the external gear $\underline{D}$ is so constructed as to form a so called "W" mechanism which is included to take out a rotation produced by a planetary movement of the planetary gear $\underline{B}$ with a ratio of speed reduction of 1/1.

On the other hand, the said rotation transmission mechanism 2 is constructed of a diversion input gear (i. e. internal sun gear) $\underline{E}$ that is formed in the above mentioned exterior case 3, a diversion output gear (i. e. internal sun gear) $\underline{H}$ that is coaxially secured to the output shaft $\underline{S}$ from the above mentioned differential gear mechanism 1, and a pair of idler gears (i. e. planetary gears) $\underline{F}$ each of which is meshed with both the said diversion output gear $\underline{H}$ and the above mentioned diversion input gear $\underline{E}$ and has a rotary shaft 4 secured to the above mentioned exterior case 3 and revolved. The idler gear $\underline{F}$ is arranged in a so called star type configuration about the diversion output gear $\underline{H}$.

Each of the rotary shafts 4 is provided to constitute a carrier for the idler gear $\underline{F}$ which carrier in the present embodiment is made integral with the said diversion input gear $\underline{E}$, and is securely fixed to the above mentioned exterior case 3, a distinct feature of the present embodiment. From this, it will be seen that a gear mechanism can be obtained with the ratio of speed reduction of the said rotation transmission mechanism being extremely close to 1 and that because its simple construction it can readily be assembled. Furthermore, in a case where the said rotary shaft 4 and the said idler gear F are arranged in an up and down symmetric configuration and in a star type configuration, it will be seen that a force of rotation can be transmitted at a high efficiency and in a well balanced condition.

In connection with the above, it will also be seen that the exterior case 3 is rotatably journaled within a housing 5 fixed and held stationary.

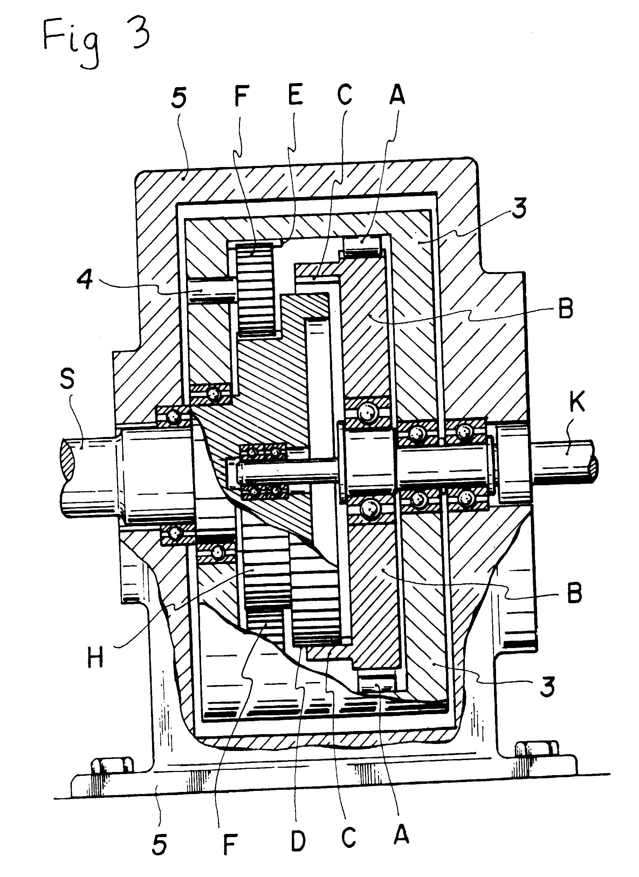

Shown as a concrete constructional example based upon such a diagrammatic gear constructional view of Example 1 is Fig. 3 which is partly cut away. Since the roles of the respective constructive parts are same as those of the above noted Fig. 2, with these parts being identified by identical numerals and characters, their details will be omitted here with reference to Fig. 3.

**[The Operation of Embodiment 1]**

With respect to the gear mechanism of the above mentioned embodiment 1, a description will now be given as to how a given speed reduction is carried out.

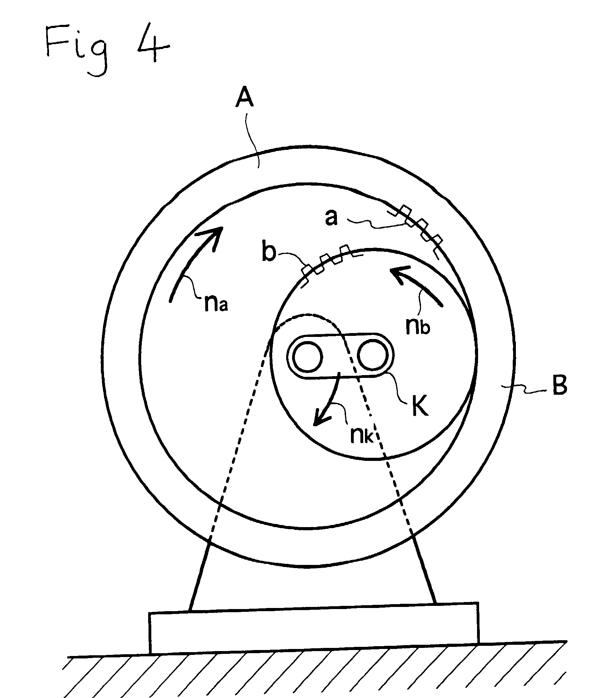

First of all, with respect to the operating principles of the parts of the said differential gear 1, an explanation will be made with reference to a diagrammatic view of Fig. 4 showing a differential gear mechanism in general.

With the number of the teeth of the internal sun gear $\underline{A}$ being denoted as $\underline{a}$, the number of its rotation denoted as $n_a$, the the number of the teeth of the planetary gear $\underline{B}$ denoted as $\underline{b}$, the number of its rotation denoted as $n_b$, and the number of the rotation of the carrier $\underline{K}$ denoted as $n_k$, the following general equation applies:

$$n_b = (1-a/b)n_k + (a/b)n_a$$

In this connection, since the procedure of formulating such an equation has been well known from a school textbook, it will be omitted here. Furthermore, whilst the term "number of rotation" is used throughout the description hereof, it should be understood that this term is intended to mean a number of rotation per unit time and hence the rate or speed of rotation.

With respect to the equation noted above, it should be noted that $n_b$ designates the number of rotation at the output side whereas $n_k$ designates the number of rotation at the input side. It should also be noted that with respect to a number of rotation, the symbol (+) is intended to designate a positive rotation (note that the input rotation and the output rotation are identical to each other) whereas the symbol (-) is intended to designate a reverse rotation.

What follows next is an explanation designed to facilitate the understanding hereof. Thus, an assumption will be made here in which the differential gear mechanism in question is a planetary gear mechanism with the difference in number between the teeth a and the teeth b being equal to 1. Accordingly, substituting the above noted equation with (a-b=1) and rearranging the same will yield the following simplified general equation:

$$n_b = (-1/b)n_k + [(b+1)/b]n_a \tag{1}$$

From this equation, by applying a variety of values to $n_a$ therein, a variety of output forms ($n_b$=?) will be obtained as illustrated below.

[Example 1-1]

Assuming that $n_a$=0 (which means that the internal sun gear 1 is fixed), the above equation can be expressed as follows:

$$n_b=(-1/b)n_k+[(b+1)/b]x0=(-1/b)n_k$$

establishing an ordinary planetary gear speed reducer. It is seen that the direction of rotation is a reverse direction of the rotation.

[Example 1-2]

Assuming that $n_a=(1/b)n_k$ (which means that the same number of rotation as the number of the rotation that is output from an ordinary planetary speed reducer is transmitted to the internal sun gear $\underline{A}$ in the reversed direction of rotation), the following equation will result:

$$n_b=(-1/b)n_k+[(b+1)/b](1/b)n_k=(1/b^2)n_k$$

establishing a speed reducer that is equal to one in which a pair of planetary gear reducers are connected in series. It is seen that the direction of rotation is a positive direction of the rotation.

[Example 1-3]

Assuming that $n_a=(1/a)n_k=[1/(b+1)]n_k$ (which means that when the output shaft of a planetary gear reducer is fixed, a number of the rotation which is derived from the internal sun gear $\underline{A}$ is transmitted, there will result the following equation:]

$$n_b=(-1/b)n_k+(a/b)(1/a)n_k=0$$

permitting an infinite ratio of speed reduction to be obtained.

[Example 1-4]

Assuming that $n_a=(1/1.089b)n_k$ (which means that the ratio of speed reduction (1/b) that is derived from the output shaft of a planetary gear speed reducer is further reduced in speed ratio to 1/1.089), the following equation will be obtained:

$$n_b=(-1/b)n_k+[(b+1)/b](1/1.089)n_k$$

$$=[(-1.089b+b+1)/1.089b^2]n_k$$

Here, assuming that the number of teeth $\underline{b}$ of the planetary gear $\underline{B}$ is, for example, 10, the preceding equation can be calculated to yield:

$$n_b=(1/990)n_k$$

Then, if the ratio of speed reduction of the first step of the planetary gear speed reducing mechanism (when the internal sun gear $\underline{A}$ is fixed) is as low as 1/10, it will be seen that by rotating the internal sun gear $\underline{A}$, a ratio of speed reduction which is as high as 1/990 can be obtained in a positive direction of the rotation.

[Example 1-5]

Assuming that $n_a=(0.9/b)n_k$ (which means that the ratio of speed reduction (1/b) that is derived from the output axis of a planetary gear reducing mechanism is further reduced to 0.9), there will ensue the following equation:

$$n_b = (-1/b)n_K + [(b+1)/b](0.9/b)n_K$$

$$= [(0.9b - b + 0.9)/b^2]n_K$$

Here, assuming that the number of the teeth $\underline{b}$ is, for example, 10, the above equation will result in

$$n_b = (-1/1000)n_k$$

meaning that a large ratio of speed reduction can be obtained in a negative direction of rotation at this time.

An explanation will next be given with respect to the operating principles of the parts in the said rotation transmission mechanism 2.

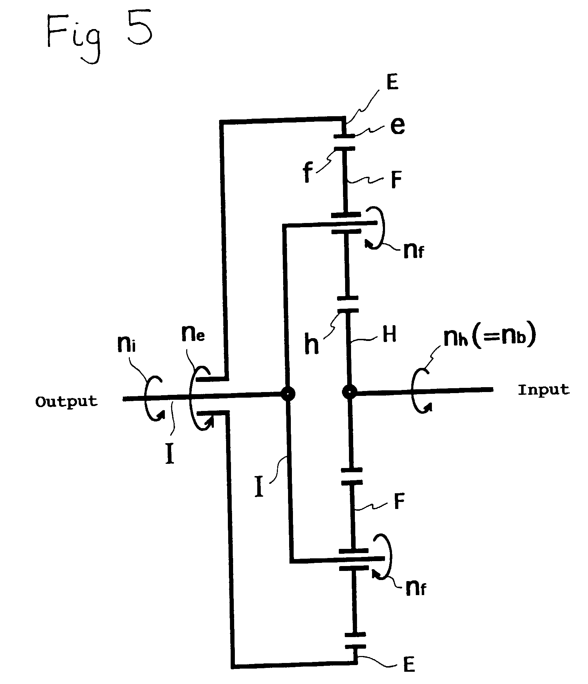

Since the rotation transmission mechanism 2 in the present embodiment makes use of a differential gear mechanism, the explanation will first be given using a differential gear mechanism in general which is diagrammatically shown in Fig. 5.

In the Figure, assuming that a diversion input gear $\underline{E}$, a planetary gear (idler gear) $\underline{F}$ and a diversion output gear $\underline{H}$ have the numbers of rotation $n_e$, $n_f$ and $n_h$. respectively, and the numbers of teeth $\underline{e}$, $\underline{f}$ and $\underline{h}$, respectively, and that a carrier $\underline{I}$ has the number of rotation $n_i$, the relationship of these numbers of rotation will be expressed by the following equation:

$$n_i = (n_h h + n_e e)/[2(h+f)]$$

In this connection, it should be noted that since the procedure of formulating such an equation is well known from a school textbook, it will be omitted here.

Since the carrier $\underline{I}$ is fixed to, and made integral with, the diversion input gear $\underline{E}$ in the present embodiment 1 shown in Fig. 2, the relationship that $n_i = n_e$ should applies. Accordingly, if the above equation is substituted with this relationship and re-arranged, it will be expressed as follows:

$$n_e(2h + 2f - e) = n_h h \qquad (2)$$

Here, with the differential gear mechanism 1 also taken into consideration, it is understood that the ratios of speed reduction, section by section, can be derived as follows:

[Example 2-1]

Since the internal sun gear A and the diversion input gear $\underline{E}$ are made integral with each other in the embodiment 1 shown in Fig. 2, the relationship that $n_a = n_e$ will stand. Also, since $n_b$ which represents the output number of rotation in the previously mentioned equation (1) is equal to $n_s$ which represents the number of rotation $n_s$ of the output shaft $\underline{S}$ shown in Fig. 2, it will be understood that the said equation (1) can be replaced as follows:

$$n_s = (-1/b)n_k + [(b+1)/b]n_e \qquad (3)$$

Here, if the respective numbers of teeth are set to satisfy the relationship that $e:f:h=4:1:2$, it will be noted that the ratio of speed that is transmitted from the diversion output gear $\underline{H}$ to the diversion input gear $\underline{E}$ can be derived from the said equation (2) as follows:

$$n_e/n_h = 2/(4+2+4) = 1$$

Accordingly, with the relation that $(n_a=)n_e=(1/b)n_k$ standing from the principle of a planetary gear speed reducer, it can be seen that the substitution of the above mentioned equation with the above relationship will result in:

$$n_s=(-1/b)n_k+[(b+1)/b](1/b)n_k$$

If this equation is rearranged, it is understood that the ratio of speed reduction from the input to the output becomes:

$$n_s/n_k=1/b^2$$

It can be noted that this result is, like in the above mentioned [Example 1-2], the same as that where a pair of planetary gears are connected in series.

[Example 2-2]

Where the relationship that e:f:h=12:1.5:10 is set using a transfer gear, the previously cited equation (2) will give rise to:

$$n_e/n_h=10/11$$

Thus, since

$$n_e=(1/b)(10/11)n_k,$$

if the equation (3) is substituted with this relationship, it will result in the following equation:

$$n_s=(-1/b)n_k+[(b+1)/b](1/b)(10/11)n_k$$

$$=[(10-b)/11b^2]n_k \dots \dots \dots \dots \dots \dots (4)$$

From this equation (4), it should be apparent that the ratio of speeds from the input to the output can be shown.

From the above noted equation (4), let us take up several examples of the concrete number of teeth of the planetary gear $\underline{B}$ in the previously mentioned differential gear mechanism.

(1) When b=10, it will be seen that $n_s/n_k=0/1100$, thus enabling an infinite ratio of speed reduction to be obtained.
(2) When b=11, it will be seen that a ratio of speed reduction: $n_s/n_k=-1/1331$ can be obtained.
(3) When b=12, it will be seen that a ratio of speed reduction: $n_s/n_k=-1/792$ can be obtained.

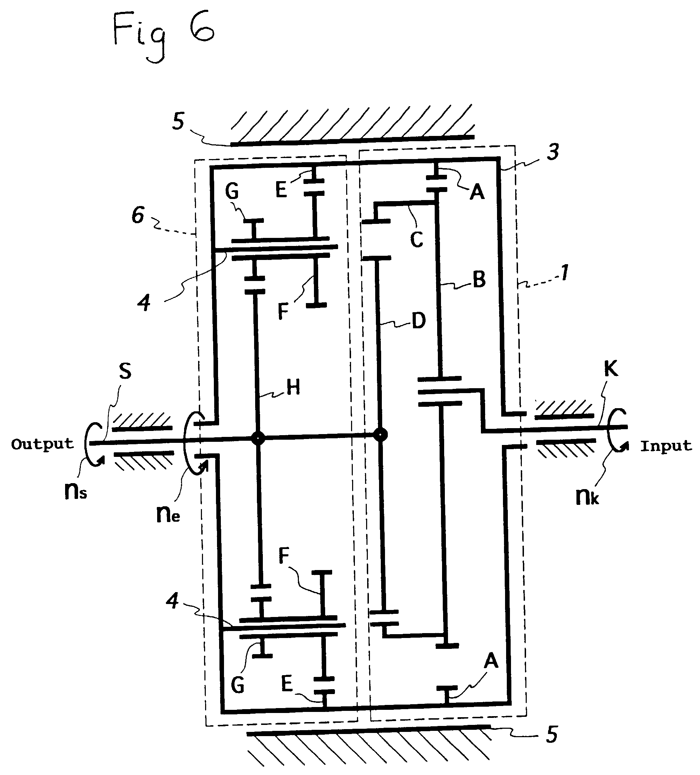

Whilst Fig. 2 represents the Embodiment 1 of the present invention, it should be noted that Fig. 6 illustrates a construction that has been put into practice based thereon. More specifically, in a rotation transmission mechanism 6, it is to be noted that a transmission from an idler gear $\underline{F}$ to a diversion input gear $\underline{E}$ is made by doing so via an idler gear (planetary gear) $\underline{G}$ to the diversion input gear $\underline{E}$ (i. e. the internal planetary gear $\underline{A}$) with an optional ratio of speed reduction that is close to 1. thus enabling a wide range of speed reductions up to the infinity to be obtained.

It should further be noted that the construction of the embodiment 1 that has herein be presented as a differential gear mechanism is illustrative and not limitative. The differential gear mechanism that is employed herein may, other than that illustrated, be a differential gear mechanism in general.

[Example 2]

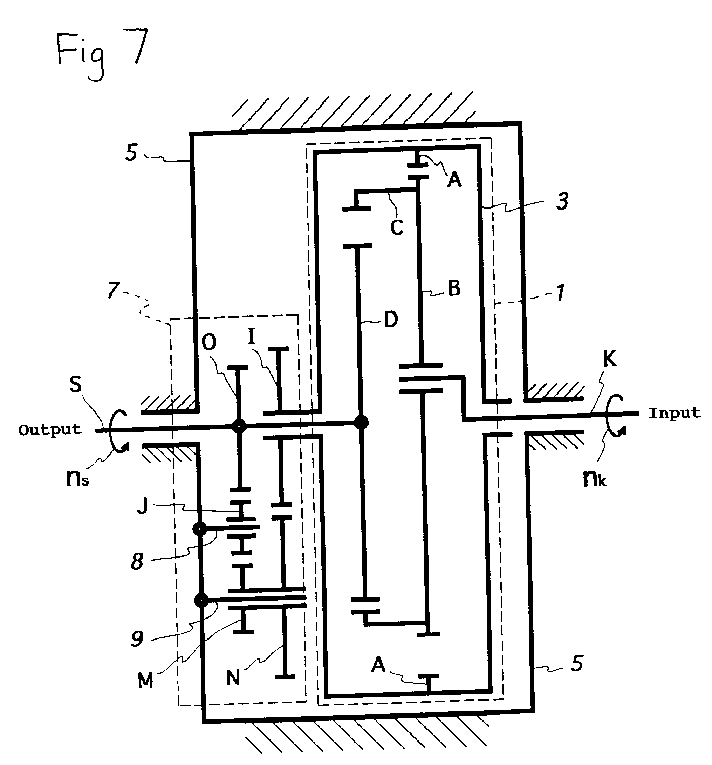

An explanation will next be given with respect to a second embodiment (Embodiment 2) of the present invention, To this end, reference is made to Fig. 7 which diagrammatically illustrates a gear construction. In this connection, it should be noted that the construction of the differential gear mechanism 1 shown is similar to that which has been employed in connection with the Embodiment 1 and the repeated description of the identical or similar parts that are given the same reference numerals or symbols will be omitted.

In the present embodiment, a rotation drive mechanism 7 is constructed of a diversion output gear $\underline{O}$ that is coaxially secured to an output shaft S, an idler gear $\underline{J}$ that is meshed with the said diversion output gear $\underline{O}$ and is journaled on a support shaft 8 which is secured to a side surface of a housing 4, an idler gear $\underline{M}$ that is meshed with the said idler gear $\underline{J}$ and is journaled on a support shaft 9 which is rotatably secured to a side surface of the housing 4, an idler gear $\underline{N}$ that is attached in an axially integrated configuration to the said idler gear $\underline{M}$, and a diversion input gear $\underline{I}$ that is meshed with the said idler gear $\underline{N}$ and is journaled on an end portion of an exterior case 3 in a differential gear mechanism 1.

Thus, it can be seen that these gears $\underline{I}$, $\underline{J}$, $\underline{M}$, $\underline{N}$ and O will not be revolved but be simply rotated about a fixed axis (and will not planetarily be moved).

By way of suitably combining these gears, it should be noted that a rotation of the output shaft $\underline{S}$ is reduced, increased or generally varied in speed. Alternatively, almost without being varied in speed, it may simply be transmitted to the exterior case 3 (i. e. the internal sun gear $\underline{A}$).

An explanation will now be given below with respect to possible forms of its ratio of speed reduction.

Assuming here that the diversion output gear $\underline{O}$ and the diversion input gear $\underline{I}$ have their respective numbers of teeth $\underline{o}$ and $\underline{i}$, the number of rotation $n_a$ that can be transmitted by these numbers of teeth $\underline{o}$ and $\underline{i}$ to the internal sun gear $\underline{A}$ will be expressed by the general equation (4) as follows:

$$N_a = (0/i)(1/b)n_k \tag{4}$$

[0047]

And, it will be seen that the ratio of speed reduction between the input and the output that is derived from this equation and the previously noted equation (3) can be expressed as the general equation (5) that is noted below. In this connection, it should be noted that the diversion input gear $\underline{E}$ in Fig. 2 and the diversion input gear $\underline{I}$ in Fig. 6 are each rotated integrally with the internal sun gear $\underline{A}$, it can be considered that $n_a = n_e = n_i$.

$$n_s = (-1/b)n_K + [(b+1)/b](o/i)(1/b)n_K$$

$$= n_K \times [(o/i)(b+1) - b]/b^2 \dots \dots \dots (5)$$

From this equation (5), there will result:

[Example 3-1]

If it is set that the ratio of the numbers of teeth o/i=1/1 and the number of teeth b=30, it will be seen that:

$$n_s = (-1/900)n_k$$

indicating that an output of the reverse rotation with the ratio of speed reduction of 1/900 can be obtained.

[Example 3-2]

Similarly, if it is set that the ratio of the numbers of teeth o/i=b/a and that a-b=1, it will be seen:

$$n_s = (-1/b)n_k + (a/b)(1/a)n_k = 0$$

indicating that the ratio of speed reduction of the infinity can be obtained.

[Example 3-3]

Assuming further that the ratio of the numbers of teeth o/i=24/25 and that the number of teeth b=26, it will be seen:

$$n_s = (-1/8450)n_k$$

indicating that the ratio of speed reduction of 1/8450 in the reverse rotation can be obtained.

[Example 3-4]

Also, assuming that the ratio of the numbers of teeth o/i=24/25 and that the number of teeth b=25, it will be seen that:

$$n_s=(-1/15625)n_k$$

indicating that the ratio of speed reduction of 1/15625 in the reverse rotation can be obtained.

[Example 3-5]

Also, assuming that the ratio of the numbers of teeth o/i=25/24 and that the number of teeth b=25, it will be seen that:

$$n_s \fallingdotseq (1/300)n_k$$

indicating that the ratio of speed reduction of 1/300 in the positive rotation can be obtained.

[Example 3-6]

Also, assuming that the ratio of the numbers of teeth o/i=25/24 and that the number of teeth b=10, it will be seen that:

$$n_s \fallingdotseq (-1/68.9)n_k$$

indicating that the ratio of speed reduction of about 1/69 in the positive rotation can be obtained.

In connection with the above, it should be noted in the foregoing gear construction, especially if the form of a gear used in the above mentioned differential gear mechanism is constructed in a combination with a cycloid, trochoid or arc, a greater efficiency can be obtained.

By virtue of the fact that the present invention is so constructed as mentioned in the foregoing, it should be noted that a higher ratio of speed reduction can be obtained without deteriorating the efficiency.

Whilst where a pair of planetary gear speed reducers are connected with each other as in the prior art the efficiency of the entire system becomes a multiplication of the efficiency of the primary side and the efficiency of the secondary side, according to the present invention it has now become apparent that for the reason that an output of the differential gear mechanism at the primary side is fed back to the internal sun gear at the primary side, a greater efficiency can be obtained.

With respect to such an enhanced efficiency, an explanation can be given, for example, with reference to the above mentioned embodiments of the present invention. Thus, it has be noted that a force of rotation of the output shaft $\underline{S}$ is fed back with the internal sun gear $\underline{A}$ to the gear $\underline{B}$ via the gear $\underline{H}$, the gear $\underline{F}$ and the gear $\underline{E}$, indicating that a negative feedback is being loaded to to the input shaft $\underline{K}$. Accordingly, since a closed feedback loop (i. e. a closed circuit) which comprises [the gear $\underline{H}$ → the gear $\underline{F}$ → the gear $\underline{E}$ → the gear $\underline{A}$ → the gear $\underline{B}$ → the gear $\underline{C}$ → the gear $\underline{D}$ → the gear $\underline{H}$] is established in the system of transmitting a rotary force, in the meshed engagements between the respective gears or a portion of these meshed engagements within the said loop, the tooth surface of a given gear at the follow-up operating side will act to run away from the tooth surface of a given gear at the driving side. Thus, at an interface between different tooth surfaces, a sliding contact thereof will be reduced and will approach to a rolling contact therewith so that the loss of the load due to their friction may be extremely reduced. Furthermore, since a load acting on a bearing that supports each gear within the said loop is reduced, the loss of the load there will too be reduced, thereby enabling a drop in the efficiency of the total system to be prevented from taking place.

Whilst a pair of planetary gear speed reducers having an identical ratio of speed reduction: 1/Z can be connected with each other to provide a greater ratio of speed reduction: $1/Z^2$, it will be seen that the prevent invention enables an identical expanded ratio of speed reduction: $1/Z^2$ to be obtained by diverting the output of a single planetary gear reducer having a ratio of speed reduction: 1/Z and circulating the diverted output as it is to the internal sun gear.

It will further be seen that by diverting a rotary output of the differential gear mechanism and effecting a feedback thereof to the internal sun gear while little decelerating the same, or transmitting the same as it is, or a bit accelerating the same (preferably within a range of the ratio of speed reduction from 0.7 to 1.3) by means of the rotation transmission mechanism, it is possible to realize a wide variety of the ratio of speed reduction and especially a large ratio of speed reduction that is close to the infinity. It will further be seen that it is also possible to optionally set the direction of a rotation as desired.

As set forth in the foregoing, it will now be apparent that the present invention is capable of achieving remarkable effects in a speed reduction apparatus by enhancing both the ratio of speed reduction to not less than 100 % and the efficiency to not less than 90 % with a reasonable number of gears and in a compact and inexpensive construction.

While the present invention has hereinbefore been described with respect to certain illustrative embodiments thereof, it will readily be appreciated by a person skilled in the art to be obvious that many alterations thereof, omissions therefrom and additions thereto can be made without departing from the essence and the scope of the present invention. Accordingly, it should be understood that the present invention is not limited to the specific embodiments thereof set out above, but includes all possible embodiments thereof that can be made within the scope with respect to the features specifically set forth in the appended claims and encompasses all equivalents thereof.

## Claims

1. A speed reduction apparatus, characterized in that it comprises:

   a differential gear mechanism having an input shaft and an output shaft; and
   a rotation transmission mechanism that is connected to the output shaft of said differential gear mechanism for transmitting a force of rotation from said output shaft to an internal sun gear in said differential gear mechanism.

2. A speed reduction apparatus, as set forth in claim 1, characterized in that said rotation transmission mechanism is constituted by a speed reducing mechanism.

3. A speed reduction apparatus, as set forth in claim 1, characterized in that said rotation transmission mechanism is constituted by a speed increasing mechanism.

4. A speed reduction apparatus, as set forth in any one of the preceding claims, characterized in that an input direction of the rotation and an output direction of the rotation of said rotation transmission mechanism are different from each other.

5. A speed reduction apparatus, as set forth in any one of the preceding claims, characterized in that an additional internal sun gear and a carrier are made integral with each other in said rotation transmission mechanism.

6. A speed reduction apparatus, as set forth in any one of claims 1 to 4, characterized in that said differential gear mechanism is constructing of a carrier that constitutes said input shaft, said internal sun gear that is formed in an exterior case, a planetary gear that is internally meshed with said internal sun gear and is journaled eccentrically on said carrier, an internal gear that is integrally attached to said planetary gear, and an external gear that is meshed with said internal gear to constitute a "W" mechanism and is connected to said output shaft.

7. A speed reduction apparatus, as set forth in claim 5, characterized in that said differential gear mechanism is constructing of said carrier that constitutes said input shaft, said internal sun gear that is formed in an exterior case, a planetary gear that is internally meshed with said internal sun gear and is journaled eccentrically on said carrier, an internal gear that is integrally attached to said planetary gear, and an external gear that is meshed with said internal gear to constitute a "W" mechanism and is connected to said output shaft.

8. A speed construction apparatus as set forth in any one of claims 1 to 5, characterized in that said rotation transmission mechanism is constructed of a diversion input gear that is formed in an exterior case, a diversion output gear that is coaxially secured to said output shaft from said differential gear mechanism, and an idler gear that is meshed with both said diversion output gear and said diversion input gear and has a rotary shaft fixedly arranged in said exterior case in a star type configuration and adapted to be revolved.

9. A speed construction apparatus as set forth in claim 6 or 7, characterized in that said rotation transmission mechanism is constructed of a diversion input gear that is formed in said exterior case, a diversion output gear that is coaxially secured to said output shaft from said differential gear mechanism, and an idler gear that is meshed with both said diversion output gear and said diversion input gear and has a rotary shaft fixedly arranged in said exterior case in a star type configuration and adapted to be revolved.

**10.** A speed reduction apparatus as set forth in any one of the preceding claims, characterized in that said said rotary transmission mechanism has a rate of speed reduction ranging between 0.7 and 1.3.

**11.** A method of reducing the rate of rotation of a rotary member, characterized in that it comprises the steps of:

providing a differential mechanism with an input shaft that constitutes said rotary member and an output shaft at which said rate of rotation is to be reduced;
connecting a rotary transmission mechanism to said output shaft of said differential gear mechanism; and
transmitting a force of rotation from said output shaft to an internal sun gear in said gear mechanism.

**12.** A method of reducing the rate of rotation of a rotary member as set forth in claim 11, characterized in that it further comprises the step of constituting said rotation transmission mechanism with a speed reducing mechanism.

**13.** A method of reducing the rate of rotation of a rotary member as set forth in claim 11, characterized in that it further comprises the step of constituting said rotation transmission mechanism with a speed increasing mechanism.

**14.** A method of reducing the rate of rotation of a rotary member, as set forth in any one of claims 11, 12 and 13, characterized in that an input direction of the rotation and an output direction of the rotation of said rotation transmission mechanism are different from each other.

**15.** A method of reducing the rate of rotation of a rotary member, as set forth in any one of claims 11 to 14, characterized in that an additional internal sun gear and a carrier are made integral with each other in said rotation transmission mechanism.

**16.** A method of reducing the rate of rotation of a rotary member, as set forth in any one of claims 11 to 14, characterized in that it further comprises the step of constituting said different gear mechanism with a carrier that constitutes said input shaft, said internal sun gear that is formed in an exterior case, a planetary gear that is internally meshed with said internal sun gear and is journaled eccentrically on said carrier, an internal gear that is integrally attached to said planetary gear, and an external gear that is meshed with said internal gear to constitute a "W" mechanism and is connected to said output shaft.

**17.** A method of reducing the rate of rotation of a rotary member, as set forth in claim 15, characterized in that it further comprises the step of constituting said different gear mechanism with said carrier that constitutes said input shaft, said internal sun gear that is formed in an exterior case, a planetary gear that is internally meshed with said internal sun gear and is journaled eccentrically on said carrier, an internal gear that is integrally attached to said planetary gear, and an external gear that is meshed with said internal gear to constitute a "W" mechanism and is connected to said output shaft.

**18.** A method of reducing the rate of rotation of a rotary member, as set forth in any one of claims 11 to 15, characterized in that it further comprises the step of constituting said rotation control mechanism with a diversion input gear that is formed in an exterior case, a diversion output gear that is coaxially secured to said output shaft from said differential gear mechanism, and an idler gear that is meshed with both said diversion output gear and said diversion input gear and has a rotary shaft fixedly arranged in said exterior case in a star type configuration and adapted to be revolved.

**19.** A method of reducing the rate of rotation of a rotary member, as set forth in claim 16 or 17, characterized in that it further comprises the step of constituting said rotation control mechanism with a diversion input gear that is formed in said exterior case, a diversion output gear that is coaxially secured to said output shaft from said differential gear mechanism, and an idler gear that is meshed with both said diversion output gear and said diversion input gear and has a rotary shaft fixedly arranged in said exterior case in a star type configuration and adapted to be revolved.

**20.** A method of reducing the rate of rotation of a rotary member, as set forth in claim 18 or 19, characterized in that it further comprises the step of ranging the ratio of speed reduction of said rotary transmission mechanism between 0.7 and 1.3.

**21.** A method of making a speed reduction apparatus, characterized in that it comprises the steps of:

providing a differential mechanism with an input shaft and an output shaft; and
connecting a rotary transmission mechanism to said output shaft of said differential gear mechanism so that a force of rotation from said output shaft may be transmitted to an internal sun gear in said gear mechanism.

22. A method of making a speed reduction apparatus, as set forth in claim 21, characterized in that it further comprises the step of constituting said rotation transmission mechanism with a speed reducing mechanism.

23. A method of making a speed reduction apparatus, as set forth in claim 21, characterized in that it further comprises the step of constituting said rotation transmission mechanism with a speed increasing mechanism.

24. A method of making a speed reduction apparatus, as set forth in any one of claims 21, 22 and 23, characterized in that an input direction of the rotation and an output direction of the rotation of said rotation transmission mechanism are different from each other.

25. A method of making a speed reduction apparatus, as set forth in any one of claims 21 to 24, characterized in that an additional internal sun gear and a carrier are made integral with each other in said rotation transmission mechanism.

26. A method of making a speed reduction apparatus, as set forth in any one of claims 21 to 24, characterized in that it further comprises the step of constituting said different gear mechanism with a carrier that constitutes said input shaft, said internal sun gear that is formed in an exterior case, a planetary gear that is internally meshed with said internal sun gear and is journaled eccentrically on said carrier, an internal gear that is integrally attached to said planetary gear, and an external gear that is meshed with said internal gear to constitute a "W" mechanism and is connected to said output shaft.

27. A method of making a speed reduction apparatus, as set forth in claim 25, characterized in that it further comprises the step of constituting said different gear mechanism with said carrier that constitutes said input shaft, said internal sun gear that is formed in an exterior case, a planetary gear that is internally meshed with said internal sun gear and is journaled eccentrically on said carrier, an internal gear that is integrally attached to said planetary gear, and an external gear that is meshed with said internal gear to constitute a "W" mechanism and is connected to said output shaft.

28. A method of making a speed reduction apparatus, as set forth in any one of claims 21 to 25, characterized in that it further comprises the step of constituting said rotation control mechanism with a diversion input gear that is formed in an exterior case, a diversion output gear that is coaxially secured to said output shaft from said differential gear mechanism, and an idler gear that is meshed with both said diversion output gear and said diversion input gear and has a rotary shaft fixedly arranged in said exterior case in a star type configuration and adapted to be revolved.

29. A method of making a speed reduction apparatus, as set forth in claim 26 or 27, characterized in that it further comprises the step of constituting said rotation control mechanism with a diversion input gear that is formed in said exterior case, a diversion output gear that is coaxially secured to said output shaft from said differential gear mechanism, and an idler gear that is meshed with both said diversion output gear and said diversion input gear and has a rotary shaft fixed arranged in said exterior case in a star type configuration and revolved.

30. A method of making a speed reduction apparatus, as forth in claim 28 or 29, characterized in that it further comprises the step of ranging the ratio of speed reduction of said rotary transmission mechanism between 0.7 and 1.3.

31. A method of making a speed reduction apparatus, as set forth in any one of claims 28 to 30, characterized in that said diversion input gear is constituted by a an internal sun gear; said diversion output gear is constituted by a an external sun gear: and said idler gear is constituted by a planetary gear.

32. A machine which incorporates a speed control apparatus that is made according to any one of claims 21 to 31.

33. A machine which incorporates a speed reduction apparatus as set forth in any one of claims 1 to 10.

Fig 1

Feedback Route for a Force of Rotation

Rotation Transmission Mechanism

Rotation Transmission Mechanism

Differential Gear Mechanism

Output Side

Input Side

Feedback Route for a Force of Rotation

# Fig 2

## Fig 3

Fig 4

# Fig 5

Fig 6

Fig 7